# EUROPEAN PATENT SPECIFICATION

(11) **EP 4 505 257 B1**
(45) Date of publication and mention of the grant of the patent: **28.01.2026**
(21) Application number: 23704113.2
(22) Date of filing: 07.02.2023
(51) Int. Cl.: G05B 19/4065, G05B 19/4062, B23P 19/06, G05B 23/02, H02H 7/08

(54) **CONTROL DEVICE AND METHOD FOR CONTROLLING A PLURALITY OF TIGHTENING TOOLS ARRANGED TOGETHER IN A FIXTURE**
STEUERUNGSVORRICHTUNG UND VERFAHREN ZUR STEUERUNG EINER VIELZAHL VON ZUSAMMEN IN EINER HALTERUNG ANGEORDNETEN FESTZIEHWERKZEUGEN
DISPOSITIF DE COMMANDE ET PROCÉDÉ DE COMMANDE D'UNE PLURALITÉ D'OUTILS DE SERRAGE DISPOSÉS ENSEMBLE DANS UN DISPOSITIF DE FIXATION

(30) Priority: 01.04.2022 SE 2230101
(43) Date of publication of application: 12.02.2025
(73) Proprietor: Atlas Copco Industrial Technique AB, 105 23 Stockholm (SE)
(72) Inventor: HANUS, Wojciech, 124 32 Bandhagen (SE)
(74) Representative: Atlas Copco Industrial Technique AB
(86) International application number: PCT/EP2023/052968
(87) International publication number: WO 2023/186384

(56) References cited:
- EP-B1- 0 851 803
- EP-B1- 3 554 761
- ANONYMOUS: "Multi-spindle tightening units | Fiamgroup", 23 January 2021 (2021-01-23), pages 1 - 1, XP093041957, Retrieved from the Internet <URL:https://web.archive.org/web/20210123111536/https://www.fiamgroup.com/en/products/multi-spindle-tightening-units/> [retrieved on 20230425]
- ANONYMOUS: "Multiple Spindle Screwdrivers", 5 June 2018 (2018-06-05), pages 1 - 1, XP093041960, Retrieved from the Internet <URL:https://web.archive.org/web/20180605052431/https://www.designtoolinc.com/fixtured-components/multiple_spindle_screwdrivers/index.php> [retrieved on 20230425]

## Description

### Field of the invention

The present invention generally relates to the field of control of tightening tools arranged together in a fixture and configured to perform simultaneous tightening operations.

### Background of the invention

In manufacturing industry, groups of tightening tools arranged together in a fixture are used to perform simultaneous tightening operations of similar types of joints. An example is assembly of vehicles, when such fixtured tools are used to simultaneously tighten wheel bolts when a wheel is mounted to a hub. Each tool in the fixture typically comprises an electric motor and a set of gears for transferring the torque from the motor to an output shaft of the tool. Dust and particles may over time gather in the gears and lubrication may gradually get deteriorated. Therefore, the gears regularly need maintenance to avoid getting too inefficient over time and to reduce the risk of gear failure, which can cause stop of the assembly process. If the gear breaks, they might be hard to replace due to the nature of the fixtured tools. Maintenance is typically done according to a schedule. A downside of that is that there is a risk of the maintenance being made earlier or later than what is actually needed, which in turn may reduce the efficiency of the manufacturing and increase costs. EP0851803B1, is a publication related to a system for the simultaneous tightening of two or more screw joints by means of a nut running tool having two or more output spindles.

### Summary of the invention

It would be advantageous to achieve a solution overcoming, or at least alleviating, the above mentioned drawback. In particular, it would be desirable to enable a control device and a method enabling an improved maintenance of fixtured tightening tools.

To better address one or more of these concerns, a control device and a method having the features defined in the independent claims are provided. Preferable embodiments are defined in the dependent claims.

Hence, according to a first aspect, a control device configured to control a plurality of tightening tools arranged together in a fixture is provided. Each tool comprises an electric motor and gearing connected thereto for driving tightening operations. The control device is configured to: in conjunction with tightening operations performed simultaneously by the tools, obtaining a parameter for each tool indicative of an efficiency of the gearing of that tool; and issue a notification to a user in response to the obtained parameter of any one of the tools deviating to a certain extent from at least some of the obtained parameters of the other tools.

According to a second aspect, a method for controlling a plurality of tightening tools arranged together in a fixture is provided. Each tool comprises an electric motor and gearing connected thereto for driving tightening operations. The method comprises: in conjunction with tightening operations performed simultaneously by the tools, obtaining a parameter for each tool indicative of an efficiency of the gearing of that tool; and issuing a notification to a user in response to the obtained parameter of any one of the tools deviating to a certain extent from at least some of the obtained parameters of the other tools.

The inventor has realized that in fixtured tools, the fact that the tools are in a plurality and perform the same type of simultaneous tightening operations in the same environment can be utilized to detect abnormal behaviour of one of the tools. The tools having a normal behaviour may be used as a comparison for detecting a tool that behaves abnormal, which may indicate a need of maintenance. This may be realized by observing a parameter for each tool indicative of an efficiency of the gearing of that tool. A decreased efficiency of the gearing may indicate that maintenance might be required. Thus, if the obtained parameter of one tool deviates to some extent from at least some of the obtained parameters of the other tools, a notification may be issued in order to enable for a user/operator to check the tool and, if required, perform maintenance of that tool. Maintenance of the tools may then be made based on the actual need instead of according to a predetermined scheme. Hence, the risk of the maintenance being made earlier or later than what is actually needed is reduced, which in turn increases the efficiency of the manufacturing and reduces costs.

According to an embodiment, the obtained parameter for each tool may be indicative of one or more of: a temperature of the motor or in the vicinity thereof; and a motor current.

Efficiency of the gears gradually decreasing over time will gradually increase the load on the motor of the tool. The increased load on the motor will result in a higher temperature in the motor and the motor will require a higher current to produce the requested torque. Hence, any of these parameters may be suitable to observe in order to detect abnormal behaviour of the tools. However, it will be appreciated that any parameter indicative of the efficiency of the gearing may be used, such as any parameter that is measurable and affected by the degree of efficiency of the gears.

According to an embodiment, the obtaining of the parameter for each tool may be made at one or more of the following points in time: at the start of the (simultaneous) tightening operations; during the tightening operations; at the end of the tightening operations; and a predetermined period, such as a few seconds, after termination of the tightening operations.

During repeated usage of the fixtured tools, the motor temperature will gradually increase, in particular in a tool in need of maintenance. Since the temperature changes relatively slow, samples of the motor temperature may be made at any time in conjunction with the simultaneous tightening operations, such as even a while after termination of the simultaneous tightening operations. On the other hand, if the monitored parameter is the motor current, the sample of the parameter may preferably be made at some time during the tightening operations when the motor is operated.

To determine when the obtained parameter of any one of the tools deviates to a certain extent from at least some of the obtained parameters of the other tools can be realized in different ways.

For example, the control device may be further configured to: determine a comparison value based on the obtained parameters for the tools; compare each obtained parameter with the comparison value; and issue the notice in response to any one of the obtained parameters deviating from the comparison value to a predetermined extent or more. For example, each obtained parameter value may be compared with the comparison value and if it deviates from the comparison value by more than a predetermined amount, the notice may be issued. This embodiment is advantageous in that it requires a relatively small amount of computing power, since each obtained parameter only has to be compared with a single value (the comparison value).

For example, the comparison value may be a statistic parameter based on the obtained parameters, such as a mean or median value of the obtained parameters or a value provideable by any other type of suitable statistic function.

Alternatively (or as a complement), the control device may be configured to: compare each obtained parameter with each one of the other obtained parameters; based on the comparison, determine a mean deviation of the parameter of each tool to the obtained parameters of the other tools; and issue the notice in response to any one of the determined mean deviations being larger than a predetermined value.

According to an embodiment, the control device may be further configured to: repeat the obtaining of the parameter for each tool for several consecutive sets of simultaneous tightening operations, and issue the notification to the user only in response to the obtained parameter of any one of the tools deviating to a certain extent from at least some of the obtained parameters of the other tightening tools for a plurality of said consecutive sets of simultaneous tightening operations, such as for several sets in a row. The present embodiment is advantageous in that it provides a more robust alert system for abnormal behaviour.

According to an embodiment, the control device may be further configured to: obtain trace data of the tightening operations; and taking into account the trace data when determining to which extent each obtained parameter is allowed to deviate from at least some of the other obtained parameters before issuing the notification to the user. Trace data may be data indicative of tightening parameters over time. Trace data may include e.g. tightening torque and angle of the tightening operations over time. For example, higher torque and/or angle may generally result in a higher motor temperature. Hence, the allowed deviation may be increased with increased angle/torque.

According to embodiments, to which extent the obtained parameter for each tool is allowed to deviate from the other obtained parameters may simply be pre-set or determined by machine learning.

According to an embodiment, a system is provided. The system comprises a plurality of tightening tools arranged together in a fixture, wherein each tool comprises an electric motor and gearing connected thereto for driving tightening operations, and a control device according to any one of the above described embodiments.

According to an embodiment, a computer program product is provided comprising instructions which, when executed by a computer (such as the control device), cause the computer to carry out the method according to the second aspect.

According to an embodiment, a computer-readable medium is provided comprising instructions which, when executed by a computer (such as the control device), cause the computer to carry out the method according to the second aspect.

It is noted that embodiments of the invention relates to all possible combinations of features recited in the claims. Further, it will be appreciated that the various embodiments described for the control device are all combinable with the method as defined in accordance with the second aspect of the present invention.

### Brief description of the drawings

These and other aspects will now be described in more detail in the following illustrative and non-limiting detailed description of embodiments, with reference to the appended drawings.
Figure 1 shows a system according to an embodiment.
Figure 2 shows a tool according to an embodiment.
Figure 3 shows a method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

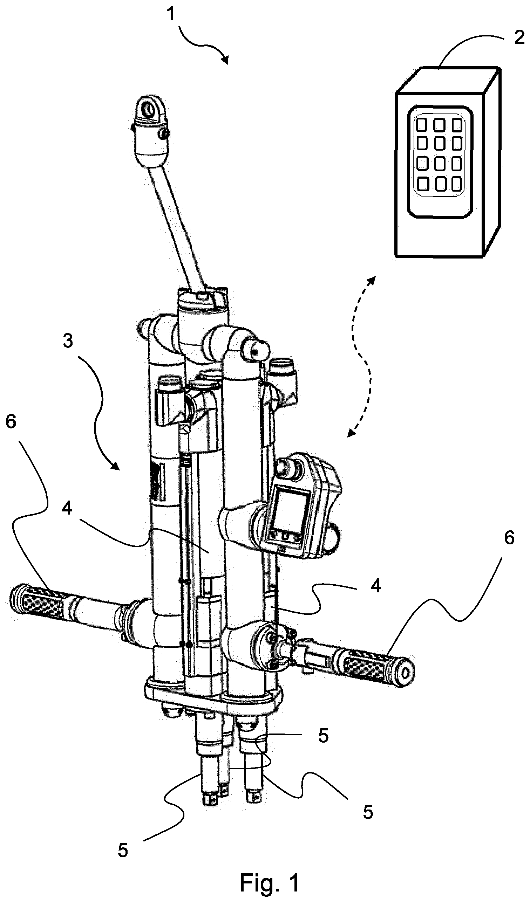

A system 1 according to an embodiment will be described with reference to Figure 1. The system 1 comprises a set of tightening tools 4 arranged together in a fixture 3. Hence, the tools 4 are arranged in a fixed relationship to each other so as to be able to perform simultaneous tightening operations. In the present example, a set of three tools 4 are arranged in the fixture 3. However, any other number of tools may be also be envisaged. The tools 4 may e.g. be screwdrivers or nutrunners. Each tool 4 may comprise an output shaft 5, to which e.g. sockets may be attachable. The fixture 3 may be manoeuvrable by an operator by means of handles 6. The fixtured tools 4 may be in communication with a control device 2. The control device 2 is configured to control the fixtured tools 4. For example, the control device 2 may be configured to provide the tools 4 with tightening programs for performing tightening operations. Further, the control device 2 may be configured to collect trace data from the fixtured tools 4, such as the torque and angle of a performed tightening operation, temperature readings and current. In the present example, the control device 2 is a centralized control device arranged separately from the fixtured tools 4. A centralized control device 2 may optionally be configured to control several tool fixtures 3. Alternatively (not shown), the control device may be arranged in the tool fixture 3 itself.

The control device 2 comprises processing circuitry. The control device 2 may e.g. be a computer. The processing circuitry may be configured to execute steps to perform the method as disclosed herein. The processing circuitry may for example use any combination of one or more of a suitable central processing unit (CPU), multiprocessor, microcontroller, digital processor (DSP), application specific integrated circuit (ASIC), field programmable gate arrays (FPGA) etc.

The control device 2 may comprise a storage medium comprising a computer program which when executed by the processing circuitry performs the steps of the method as disclosed herein. The storage medium may for example be embodied as a memory.

The control device 2 may further comprise a communication module configured to communicate data with the tools 4.

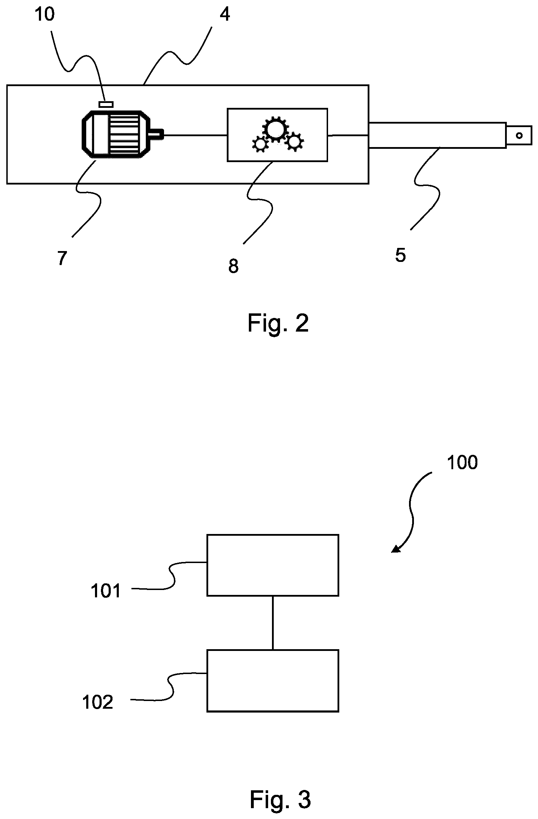

Turning now to Figure 2, the tools will be described in more detail. Each tool 4 comprises an electric motor 7 and a set of gears 8 arranged to transfer torque produced by the electric motor 7 to the output shaft 5. Each tool 4 may be provided with a temperature sensor 10 arranged to sense the temperature in or in the vicinity of the electric motor 7. The temperature sensor 10 may be in communication with the control device 2.

Turning again to Figure 1, the function of the system 1 will now be described. The control device 2 is configured to, in conjunction with tightening operations performed simultaneously by the tools 4, obtaining (determining) a parameter for each tool 4 indicative of the efficiency of the gearing of that tool 4. The parameter may e.g. be the motor current applied during the tightening operation and/or a temperature sensed by the temperature sensor 10 or any other parameter indicative of the efficiency of the gearing of the tool 4. The parameters may be obtained e.g. by the tools 4 transmitting data indicative of motor current and/or motor temperature to the control device 2.

The parameters indicative of the efficiency of the gearing of the tools 4 may be obtained (determined) e.g. at the start of, sometime during, at the end of, or a while after termination of the simultaneous starting operations. In case the parameter is the motor current, it may be sampled at any time when the motor is running.

During the simultaneous tightening operations, the temperature will rise in the motors 7. Given the present status of the efficiency of the gears 8 of each tool, a particular current will be required to operate the motor 7. During repeated simultaneous tightening operations, the temperature will rise for each set of simultaneous tightenings.

The control device 2 is further configured to issue a notification to a user/operator in response to the obtained parameter of any one of the tools 4 deviating to a certain extent from at least some of the obtained parameters of the other tools 4, such as from all of the other tools in the fixture taking part in the simultaneous tightening operations. The notification may e.g. be a visual and/or audio message on a display connected to the control device 2. The user may then understand that one of the tools 4 is behaving abnormal and need to be examined and possibly requires maintenance.

It will be appreciated that not all of the tools 4 in the fixture 3 may necessarily be operated at the same time. For example, only three out of five tools may be used during a specific tightening operation. The comparison between the parameters may then be made only between the tools being active at that tightening operation.

In order to detect abnormal behaviour of any one of the tools 4, the control device 2 may be configured to determine a comparison value based on the obtained parameters for the tools 4. The comparison value may e.g. be a statistic parameter based on the obtained parameters, such as a mean or median value of the obtained parameters. As an example, if two of the three tools 4 has a temperature of 60° C and the third 70° C, the comparison value may be determined to (60+60+70) / 3 = 63° C. The control device 2 may be further configured to compare each obtained parameter with the comparison value.

Hence, in the present example, each one of the determined parameters, 60° C, 60° C and 70° C, respectively, is compared with the comparison value of 63° C. The control device 2 may be further configured to issue the notice in response to any one of the obtained parameters deviating from the comparison value to a predetermined extent or more. In the present example, the allowed deviation from the comparison value may have been pre-set to e.g. 5° C. The two parameters of 60° C each deviate by -3° C from the comparison value of 63° C, while the parameter of 70° C deviates by 7 degrees from the comparison value of 63° C. As a consequence of one of the deviations exceeding the threshold of 5° C, a notice will be issued to the user that one of the tools 4 needs inspection.

As an alternative (or complement), the control device 2 may be configured to: compare each obtained parameter with each one of the other obtained parameters and, based on the comparison, determine a mean deviation of the parameter of each tool 4 to the obtained parameters of the other tools 4. When applied to the present temperature examples, the mean deviation for one of the tools having a temperature of 60° C to the other tools (having a temperature of 60° C and 70° C) will be ((60-60)+(60-70)) / 2 = -5° C, while the mean deviation for the tool having a temperature of 70° C will be ((70-60)+(70-60) / 2 = 10° C. The control device 2 may further be configured to issue the notice in response to any one of the determined mean deviations being larger than a predetermined value. In the present example, if the maximum allowed deviation is e.g. 7 ° C, the notice will be issued.

According to an embodiment, the notice may only be issued if a deviation of one of the determined parameters exceeds beyond what is allowed for several repeated tightening operations.

According to an embodiment, the control device 2 may also take into account trace data of the tightening operations when determining to which extent each obtained parameter is allowed to deviate before issuing the notification to the user.

In Figure 3, a method 100 according to an embodiment is illustrated. The method 100 comprises: in conjunction with tightening operations performed simultaneously by the tools, obtaining 101 a parameter for each tool indicative of the efficiency of the gearing of that tool; and issuing 102 a notification to a user in response to the obtained parameter of any one of the tightening tools deviating to a certain extent from at least some of the obtained parameters of the other tools.

It will be appreciated that the method 100 may further comprise any one of the above described steps that the control device 2 may be configured to perform.

## Claims

1. A control device (2) configured to control a plurality of tightening tools (4) arranged together in a fixture (3),
wherein each tool comprises an electric motor (7) and gearing (8) connected thereto for driving tightening operations,
the control device being configured to:
in conjunction with each one of several consecutive sets of tightening operations performed simultaneously by the tools, obtaining a parameter for each tool indicative of the efficiency of the gearing of that tool; and
issue a notification to a user only in response to the obtained parameter of any one of the tools deviating to a certain extent from at least some of the obtained parameters of the other tools for a plurality of said consecutive sets of simultaneous tightening operations.

2. The control device as defined in claim 1, wherein said parameter is indicative of one or more of:
a temperature of the motor or in the vicinity thereof; and
a motor current.

3. The control device as defined in claim 1 or 2, wherein said obtaining of the parameter for each tool is made at one or more of the following points in time:
at the start of the tightening operations;
during the tightening operations;
at the end of the tightening operations; and
a predetermined period, such as a few seconds, after termination of the tightening operations.

4. The control device as defined in any one of the preceding claims, the control device being further configured to:
determine a comparison value based on the obtained parameters for the tools;
compare each obtained parameter with the comparison value; and
issue the notice in response to any one of the obtained parameters deviating from the comparison value to a predetermined extent or more.

5. The control device as defined in claim 4, wherein the comparison value is a statistic parameter based on the obtained parameters, such as a mean or median value of the obtained parameters.

6. The control device as defined in any one of the preceding claims, the control device being further configured to:
compare each obtained parameter with each one of the other obtained parameters;
based on the comparison, determine a mean deviation of the parameter of each tool to the obtained parameters of the other tools; and
issue the notice in response to any one of the determined mean deviations being larger than a predetermined value.

7. The control device as defined in any one of the preceding claims, the control device being further configured to:
obtain trace data of the tightening operations; and
taking into account said trace data when determining to which extent each obtained parameter is allowed to deviate from at least some of the other obtained parameters before issuing the notification to the user.

8. A system (1) comprising:
a plurality of tightening tools (4) arranged together in a fixture (3),
wherein each tool comprises an electric motor (7) and gearing (8) connected thereto for driving tightening operations, and
a control device (2) according to any one of the preceding claims.

9. A method (100) for controlling a plurality of tightening tools arranged together in a fixture,
wherein each tool comprises an electric motor and gearing connected thereto for driving tightening operations,
the method comprising:
in conjunction with each one of several consecutive sets of tightening operations performed simultaneously by the tools, obtaining (101) a parameter for each tool indicative of the efficiency of the gearing of that tool; and
issuing (102) a notification to a user only in response to the obtained parameter of any one of the tools deviating to a certain extent from at least some of the obtained parameters of the other tools for a plurality of said consecutive sets of simultaneous tightening operations.

10. A computer program product comprising instructions which, when executed by a computer, cause the computer to carry out the method of claim 9.

11. A computer-readable medium comprising instructions which, when executed by a computer, cause the computer to carry out the method of claim 9.

## Patentansprüche

1. Steuervorrichtung (2), die konfiguriert ist, um eine Vielzahl von Anziehwerkzeugen (4) zu steuern, die zusammen in einer Halterung (3) angeordnet sind,
wobei jedes Werkzeug einen Elektromotor (7) und ein damit verbundenes Getriebe (8) zum Antreiben von Anziehvorgängen umfasst,
wobei die Steuervorrichtung konfiguriert ist zum:
in Zusammenhang mit jedem einen von einer Mehrzahl von aufeinanderfolgenden Sätzen von Anziehvorgängen, die gleichzeitig durch die Werkzeuge durchgeführt werden, Erhalten eines Parameters für jedes Werkzeug, der die Effizienz des Getriebes dieses Werkzeugs anzeigt; und
Ausgeben einer Benachrichtigung an einen Benutzer nur als Reaktion darauf, dass der erhaltene Parameter eines beliebigen der Werkzeuge in einem gewissen Ausmaß von mindestens einigen der erhaltenen Parameter der anderen Werkzeuge für eine Vielzahl der aufeinanderfolgenden Sätze von gleichzeitigen Anziehvorgängen abweicht.

2. Steuervorrichtung, wie in Anspruch 1 definiert, wobei der Parameter eines oder mehrere anzeigt von:
einer Temperatur des Motors oder in der Nähe davon; und
einem Motorstrom.

3. Steuervorrichtung, wie in Anspruch 1 oder 2 definiert, wobei das Erhalten des Parameters für jedes Werkzeug zu einem oder mehreren der folgenden Zeitpunkte erfolgt:
zu dem Beginn der Anziehvorgänge;
während der Anziehvorgänge;
an dem Ende der Anziehvorgänge; und
einer zuvor bestimmten Periode, wie wenigen Sekunden, nach Beendigung der Anziehvorgänge.

4. Steuervorrichtung, wie in einem der vorstehenden Ansprüche definiert, wobei die Steuervorrichtung ferner konfiguriert ist zum:
Bestimmen eines Vergleichswerts basierend auf den erhaltenen Parametern für die Werkzeuge;
Vergleichen jedes erhaltenen Parameters mit dem Vergleichswert; und
Ausgeben der Mitteilung als Reaktion darauf, dass ein beliebiger der erhaltenen Parameter von dem Vergleichswert in einem zuvor bestimmten Ausmaß oder mehr abweicht.

5. Steuervorrichtung, wie in Anspruch 4 definiert, wobei der Vergleichswert ein statistischer Parameter basierend auf den erhaltenen Parametern ist, wie ein Mittel- oder Medianwert der erhaltenen Parameter.

6. Steuervorrichtung, wie in einem der vorstehenden Ansprüche definiert, wobei die Steuervorrichtung ferner konfiguriert ist zum:
Vergleichen jedes erhaltenen Parameters mit jedem einen der anderen erhaltenen Parameter;
basierend auf dem Vergleich, Bestimmen einer mittleren Abweichung des Parameters jedes Werkzeugs zu den erhaltenen Parametern der anderen Werkzeuge; und
Ausgeben der Mitteilung als Reaktion darauf, dass eine beliebige der bestimmten mittleren Abweichungen größer als ein zuvor bestimmter Wert ist.

7. Steuervorrichtung, wie in einem der vorstehenden Ansprüche definiert, wobei die Steuervorrichtung ferner konfiguriert ist zum:
Erhalten von Trace-Daten der Anziehvorgänge; und
Berücksichtigen der Trace-Daten bei dem Bestimmen, in welchem Ausmaß jeder erhaltene Parameter von mindestens einigen der anderen erhaltenen Parameter abweichen darf, vor dem Ausgeben der Benachrichtigung an den Benutzer.

8. System (1), umfassend:
eine Vielzahl von Anziehwerkzeugen (4), die zusammen in einer Halterung (3) angeordnet sind,
wobei jedes Werkzeug einen Elektromotor (7) und ein damit verbundenes Getriebe (8) zum Antreiben von Anziehvorgängen umfasst, und
eine Steuervorrichtung (2) nach einem der vorstehenden Ansprüche.

9. Verfahren (100) zum Steuern einer Vielzahl von Anziehwerkzeugen, die zusammen in einer Halterung angeordnet sind,
wobei jedes Werkzeug einen Elektromotor und ein damit verbundenes Getriebe zum Antreiben von Anziehvorgängen umfasst,
wobei das Verfahren umfasst:
in Zusammenhang mit jedem einen von der Mehrzahl von aufeinanderfolgenden Sätzen von Anziehvorgängen, die gleichzeitig durch die Werkzeuge durchgeführt werden, Erhalten (101) eines Parameters für jedes Werkzeug, der die Effizienz des Getriebes dieses Werkzeugs anzeigt; und
Ausgeben (102) einer Benachrichtigung an einen Benutzer nur als Reaktion darauf, dass der erhaltene Parameter eines beliebigen der Werkzeuge in einem gewissen Ausmaß von mindestens einigen der erhaltenen Parameter der anderen Werkzeuge für eine Vielzahl der aufeinanderfolgenden Sätze von gleichzeitigen Anziehvorgängen abweicht.

10. Computerprogrammprodukt, umfassend Anweisungen, die, wenn sie durch einen Computer ausgeführt werden, den Computer veranlassen, das Verfahren nach Anspruch 9 vorzunehmen.

11. Computerlesbares Medium, umfassend Anweisungen, die, wenn sie durch einen Computer ausgeführt werden, den Computer veranlassen, das Verfahren nach Anspruch 9 vorzunehmen.

## Revendications

1. Dispositif de commande (2) configuré pour commander une pluralité d'outils de serrage (4) disposés ensemble dans un dispositif de fixation (3),
dans lequel chaque outil comprend un moteur électrique (7) et un engrenage (8) relié à celui-ci pour entraîner des opérations de serrage,
le dispositif de commande étant configuré pour :
en conjonction avec chacun de plusieurs ensembles consécutifs d'opérations de serrage effectuées simultanément par les outils, obtenir un paramètre pour chaque outil indiquant l'efficacité de l'engrenage de cet outil ; et
émettre une notification à l'intention d'un utilisateur uniquement si le paramètre obtenu de l'un quelconque des outils s'écarte dans une certaine mesure d'au moins certains des paramètres obtenus des autres outils pour une pluralité desdits ensembles consécutifs d'opérations de serrage simultanées.

2. Dispositif de commande selon la revendication 1, dans lequel ledit paramètre indique un ou plusieurs des éléments suivants :
une température du moteur ou à proximité de celui-ci ; et
un courant de moteur.

3. Dispositif de commande selon la revendication 1 ou 2, dans lequel ladite obtention du paramètre pour chaque outil est réalisée à un ou plusieurs des moments suivants :
au début des opérations de serrage ;
pendant les opérations de serrage ;
à la fin des opérations de serrage ; et
une période prédéterminée, par exemple quelques secondes, après la fin des opérations de serrage.

4. Dispositif de commande selon l'une quelconque des revendications précédentes, le dispositif de commande étant configuré en outre pour :
déterminer une valeur de comparaison sur la base des paramètres obtenus pour les outils ;
comparer chaque paramètre obtenu à la valeur de comparaison ; et
émettre l'avis si l'un quelconque des paramètres obtenus s'écarte de la valeur de comparaison dans une mesure prédéterminée ou plus.

5. Dispositif de commande selon la revendication 4, dans lequel la valeur de comparaison est un paramètre statistique basé sur les paramètres obtenus, tel qu'une valeur moyenne ou médiane des paramètres obtenus.

6. Dispositif de commande selon l'une quelconque des revendications précédentes, le dispositif de commande étant configuré en outre pour :
comparer chaque paramètre obtenu avec chacun des autres paramètres obtenus ;
sur la base de la comparaison, déterminer un écart moyen entre le paramètre de chaque outil et les paramètres obtenus pour les autres outils ; et
émettre l'avis si l'un quelconque des écarts moyens déterminés est supérieur à une valeur prédéterminée.

7. Dispositif de commande selon l'une quelconque des revendications précédentes, le dispositif de commande étant configuré en outre pour :
obtenir des données de traçage des opérations de serrage ; et
prendre en compte lesdites données de traçage lors de la détermination de la mesure dans laquelle chaque paramètre obtenu est autorisé à s'écarter d'au moins certains des autres paramètres obtenus avant d'émettre la notification à l'intention de l'utilisateur.

8. Système (1) comprenant :
une pluralité d'outils de serrage (4) disposés ensemble dans un dispositif de fixation (3),
dans lequel chaque outil comprend un moteur électrique (7) et un engrenage (8) relié à celui-ci pour entraîner des opérations de serrage, et
un dispositif de commande (2) selon l'une quelconque des revendications précédentes.

9. Procédé (100) permettant de commander une pluralité d'outils de serrage disposés ensemble dans un dispositif de fixation,
dans lequel chaque outil comprend un moteur électrique et un engrenage relié à celui-ci pour entraîner des opérations de serrage,
le procédé comprenant :
en conjonction avec chacun de plusieurs ensembles consécutifs d'opérations de serrage effectuées simultanément par les outils, l'obtention (101) d'un paramètre pour chaque outil indiquant l'efficacité de l'engrenage de cet outil ; et
l'émission (102) d'une notification à l'intention d'un utilisateur uniquement si le paramètre obtenu de l'un quelconque des outils s'écarte dans une certaine mesure d'au moins certains des paramètres obtenus des autres outils pour une pluralité desdits ensembles consécutifs d'opérations de serrage simultanées.

10. Produit programme d'ordinateur comprenant des instructions qui, lorsqu'elles sont exécutées par un ordinateur, amènent l'ordinateur à mettre en œuvre le procédé selon la revendication 9.

11. Support lisible par ordinateur comprenant des instructions qui, lorsqu'elles sont exécutées par un ordinateur, amènent l'ordinateur à mettre en œuvre le procédé selon la revendication 9.
